# EUROPÄISCHE PATENTSCHRIFT

(11) **EP 4 100 251 B1**
(45) Veröffentlichungstag und Bekanntmachung des Hinweises auf die Patenterteilung: **06.12.2023**
(21) Anmeldenummer: 21708568.7
(22) Anmeldetag: 05.02.2021
(51) Int. Cl.: B32B 17/10, H01B 7/04, H01B 7/08

(54) **ANSCHLUSSANORDNUNG MIT EINEM FLEXIBLEN FLACHKABEL**
FLEXIBLE FLAT CABLE
CÂBLE PLAT SOUPLE

(30) Priorität: 07.02.2020 EP 20156204
(43) Veröffentlichungstag der Anmeldung: 14.12.2022
(73) Patentinhaber: Saint-Gobain Glass France, 92400 Courbevoie (FR)
(72) Erfinder: HERMANGE, François, 52074 Aachen (DE); SPANJERS, Robin, 52072 Aachen (DE)
(74) Vertreter: Gebauer, Dieter Edmund
(86) Internationale Anmeldenummer: PCT/EP2021/052879
(87) Internationale Veröffentlichungsnummer: WO 2021/156485

(56) Entgegenhaltungen:
- WO-A1-2014/019780
- WO-A1-2014/029536
- US-A1- 2018 301 832

## Beschreibung

Die Erfindung betrifft eine Anschlussanordnung mit einem flexiblen Flachkabel mit elektrischen Leiterbahnen, sowie ein Verfahren zu deren Herstellung und deren Verwendung.

Flexible Flachleiter, auch Flachbandleiter oder Folienleiter genannt, werden vielfach im Fahrzeugbau eingesetzt, insbesondere um eine bewegliche, elektrische Kontaktierung bei beschränkten Raumbedingungen zu ermöglichen.

Im Fahrzeugbereich werden Flachleiter beispielsweise zur Kontaktierung von elektrisch funktionellen Schichten in Verbundglasscheiben verwendet. Beispiele finden sich in DE 42 35 063 A1, DE 20 2004 019 286 U1 oder DE 93 13 394 U1.

Solche Verbundglasscheiben bestehen in der Regel aus mindestens zwei starren Einzelglasscheiben, die durch eine thermoplastische Klebeschicht flächig-adhäsiv miteinander verbunden sind. Die Dicke der Klebeschicht liegt beispielsweise bei 0,76 mm. Zwischen den Einzelglasscheiben befinden sich zusätzlich elektrisch funktionelle Schichten wie Heizbeschichtungen und/oder Antennenelemente, die mit einem Flachleiter verbunden sind. Ein hierfür geeigneter Flachleiter weist lediglich eine Gesamtdicke von 0,3 mm auf. Derart dünne Flachleiter können ohne Schwierigkeiten zwischen den Einzelglasscheiben in der thermoplastischen Klebeschicht eingebettet werden.

Der Einsatz von Flachleitern zur Kontaktierung von elektrisch funktionellen Schichten ist nicht nur auf den Fahrzeugbereich beschränkt. Wie aus DE199 60 450 C1 bekannt, werden Flachleiter auch im Baubereich verwendet. In Verbund- oder Isolierglasscheiben dienen Folienleiter zur elektrischen Kontaktierung von integrierten elektrischen Bauelementen wie spannungsgesteuerten elektrochromen Schichten, Solarzellen, Heizdrähten, Alarmschleifen oder ähnlichem.

Bekannt ist auch die Verwendung von Flachleitern bei Verbundscheiben mit elektrooptischen Funktionselementen. Hierbei handelt es sich um flächenhafte Strukturen mit elektrisch regelbaren optischen Eigenschaften einer aktiven Schicht. Das heißt, die optischen Eigenschaften der aktiven Schicht und insbesondere deren Transparenz, Streuverhalten oder Leuchtkraft sind durch eine elektrische Spannung steuerbar. Beispiele für elektrooptische Funktionselemente sind SPD-Funktionselemente (SPD = Suspended Particle Device), die beispielsweise aus EP 0876608 B1 und WO 2011033313 A1 bekannt sind, und PDLC-Funktionselemente (PDLC = Polymer Dispersed Liquid Crystal), die beispielsweise aus DE 102008026339 A1 bekannt sind.

Elektrooptische Funktionselemente, wie SPD- oder PDLC-Funktionselemente, sind als Mehrschichtfolie kommerziell erhältlich, wobei die aktive Schicht zwischen zwei Flächenelektroden angeordnet ist, die zum Anlegen einer Spannung zur Steuerung der aktiven Schicht dienen. In aller Regel sind die beiden Flächenelektroden zwischen zwei Trägerfolien, typischerweise aus PET, angeordnet. Kommerziell erhältliche Mehrschichtfolien werden zudem beidseitig mit einer Schutzfolie aus Polypropylen oder Polyethylen abgedeckt, welche dazu dienen, die Trägerfolien vor Verschmutzungen oder Verkratzungen zu schützen.

Bei der Herstellung der Verbundscheibe wird das Funktionselement in der gewünschten Größe und Form aus der Mehrschichtfolie ausgeschnitten und zwischen die Folien einer Zwischenschicht eingelegt, mittels derer zwei Glasscheiben miteinander zur Verbundscheibe laminiert werden.

Eine typische Anwendung sind Windschutzscheiben mit elektrisch regelbaren Sonnenblenden, welche beispielsweise aus DE 102013001334 A1, DE 102005049081 B3, DE 102005007427 A1 und DE 102007027296 A1 bekannt sind.

In der Regel wird vom Scheibenhersteller eine Scheibe mit einem kompletten Anschlusselement und einem Anschlussbereich zum werkzeuglosen Anschluss an eine weitere Steuerungselektrik gefordert.

Die elektrische Kontaktierung von elektrooptischen Funktionselementen erfolgt üblicherweise über Sammelleiter (auch als "Busbars" bezeichnet), die im Randbereich des Funktionselementes auf die Flächenelektroden aufgebracht sind und diese elektrisch leitend kontaktieren. Durch Verbinden der Sammelleiter mit einer externen Spannungsquelle, typischer Weise über an den Sammelleitern angebrachte Flachleiter (z.B. FFC = Flexible Flat Cable), wird eine Spannung an den Flächenelektroden angelegt und die aktive Schicht des Funktionselementes geschaltet.

Für komplexere Steueraufgaben werden auch flexible Flachkabel eingesetzt, die mit einer Mehrzahl elektrischer Leiterbahnen versehen sind. Die elektrischen Leiterbahnen sind sehr dünn mit Dicken beispielsweise im Bereich von 0,03 mm bis 0,1 mm und bestehen beispielsweise aus Kupfer, das sich bewährt hat, da es eine gute elektrische Leitfähigkeit sowie eine gute Verarbeitbarkeit besitzt und die Materialkosten gleichzeitig niedrig sind.

Bei der Herstellung der flexiblen Flachkabel werden die elektrischen Leiterbahnen auf ein Trägersubstrat aus Kunststoff aufgebracht, beispielsweise im Druckverfahren, und anschließend mit einer Deckschicht aus Kunststoff abgedeckt. Alternativ werden die elektrischen Leiterbahnen als Metallstreifen aus Metallfolien vorgefertigt und beidseitig mit einem Kunststoffmaterial laminiert. In beiden Fällen sind die elektrischen Leiterbahnen mechanisch stabilisiert und in eine Isolationshülle eingebettet, so dass sie gegen die äußere Umgebung elektrisch isoliert sind.

Werden die elektrischen Leiterbahnen auf ein Trägersubstrat aufgebracht, sind sie nur von der Deckschicht her zugänglich, da nur diese entfernt werden kann, ohne die elektrischen Leiterbahnen zu beschädigen. Solche flexiblen Flachkabel haben deshalb nur eine einzige Kontaktierungsseite, welche der Seite der Deckschicht entspricht. Sollen zwei einander gegenüberliegende elektrische Strukturen, wie die Flächenelektroden eines elektrooptischen Funktionselements, aus zwei entgegengesetzten Richtungen kontaktiert werden, sind zwei flexible Flachkabel erforderlich, von denen eines um 180° gegen das andere gedreht ist, wobei die Flachkabel jeweils mit ihrer Kontaktierungsseite auf die elektrische Struktur aufgesetzt werden.

Die Patentanmeldung US 2018/0301832 A1 offenbart umgefaltete elektrische Leiterbahnen. WO 2014/029536 A1 offenbart eine Anschlussanordnung, umfassend eine Verbundscheibe, zwei elektrisch leitfähige Strukturen (zwei einander gegenüberliegende Flächenelektroden eines elektrooptischen Funktionselements), die in der Verbundscheibe angeordnet sind, und ein flexibles Flachkabel mit elektrischen Leiterbahnen.

Die Aufgabe der vorliegenden Erfindung besteht darin, eine verbesserte Anschlussanordnung mit einem flexiblen Flachkabel bereitzustellen, wobei das Flachkabel zur gemeinsamen Kontaktierung von einander gegenüberliegenden elektrischen Strukturen aus zwei entgegengesetzten Richtungen geeignet ist und gleichzeitig einfach und kostengünstig hergestellt werden kann.

Diese und weitere Aufgaben werden nach dem Vorschlag der Erfindung durch eine Anschlussanordnung mit einem flexiblen Flachkabel gemäß Anspruch 1 gelöst. Bevorzugte Ausführungen gehen aus den Unteransprüchen hervor. Ein Verfahren zur deren Herstellung sowie die Verwendung der erfindungsgemäßen Anschlussanordnung mit flexiblem Flachkabel gehen aus den nebengeordneten Ansprüchen hervor.

Die Erfindung betrifft eine Anschlussanordnung mit einem flexiblen Flachkabel, welche umfasst:
- eine Verbundscheibe aus einer ersten Scheibe und einer zweiten Scheibe, die mit einer Zwischenschicht verbunden sind,
- zwei elektrisch leitfähige Strukturen, die zwischen der ersten Scheibe und der zweiten Scheibe angeordnet sind, und
- ein flexibles Flachkabel, dessen erster Anschlussbereich mit der einen elektrisch leitfähigen Struktur und dessen zweiter Anschlussbereich mit der anderen elektrisch leitfähigen Struktur elektrisch leitend und insbesondere galvanisch verbunden sind, wobei der Flachleiter aus der Verbundscheibe herausgeführt ist und der dritte Anschlussbereich außerhalb der Verbundscheibe angeordnet ist.

Das flexible Flachkabel umfasst eine Mehrzahl elektrischer Leiterbahnen (Leiterstreifen), an denen zumindest auf einer Seite eine elektrische Isolationsschicht aus Kunststoff angeordnet ist. Vorteilhaft sind die elektrischen Leiterbahnen von einer elektrischen Isolationshülle ummantelt. Das flexible Flachkabel dient zum elektrischen Anschluss an mindestens zwei elektrische Strukturen, die vorzugsweise einander gegenüberliegend angeordnet sind und von zwei entgegengesetzten Seiten (Richtungen) her elektrisch kontaktiert werden sollen.

Das flexible Flachkabel ist ein flächiger Körper mit zwei gegenüberliegenden Seiten, der wahlweise in eine ebene oder gekrümmte Form gebracht werden kann. Im ebenen (d.h. nicht-gekrümmten) Zustand ist der Flachleiter in einer Ebene angeordnet. Das flexible Flachkabel ist generell länglich ausgebildet und weist entlang seiner Erstreckungsrichtung zwei Enden auf.

Die elektrischen Leiterbahnen sind zumindest abschnittsweise nebeneinander liegend angeordnet. Jede elektrische Leiterbahn kann an zwei entlang der Leiterbahn voneinander beabstandeten Kontaktstellen elektrisch kontaktiert werden. Die Kontaktstellen sind Bereiche der Leiterbahnen, an denen eine elektrische Kontaktierung möglich ist. In der einfachsten Ausgestaltung handelt es sich hierbei um zugängliche Bereiche der elektrischen Leiterbahnen.

Das Flachkabel ist ein längliches elektrisches Bauteil mit mehreren elektrischen Leiterbahnen, dessen Breite deutlich größer ist als die Dicke. Das Flachkabel ist derart dünn ausgebildet (d.h. die Dicke ist derart gering), dass es flexibel und biegbar ist.

Das flexible Flachkabel umfasst einen ersten Anschlussbereich, der sich entlang der Erstreckungsrichtung des Flachkabels an einem ersten Ende und auf einer ersten Seite des Flachkabels befindet. Insbesondere befindet sich der erste Anschlussbereich nur auf der ersten Seite des Flachkabels. Der erste Anschlussbereich weist eine Kontaktstelle mindestens einer der elektrischen Leiterbahnen auf.

Das flexible Flachkabel umfasst weiterhin mindestens einen zweiten Anschlussbereich, der sich auch am ersten Ende (d.h. am selben Ende wie der erste Anschlussbereich) und auf der ersten Seite (d.h. auf derselben Seite wie der erste Anschlussbereich) des Flachkabels befindet. Insbesondere befindet sich der zweite Anschlussbereich nur auf der ersten Seite des Flachkabels. Der mindestens eine zweite Anschlussbereich weist eine Kontaktstelle mindestens einer der elektrischen Leiterbahnen auf.

Ferner umfasst das flexible Flachkabel mindestens einen dritten Anschlussbereich mit Kontaktstellen der Leiterbahnen an einem zweiten Ende des Flachkabels in Erstreckungsrichtung des Flachkabels.

Die Anschlussbereiche des Flachkabels dienen zum elektrischen Kontaktieren der Leiterbahnen, zu welchem Zweck die Isolationshülle zumindest an den Kontaktstellen nicht vorhanden oder entfernt ist, so dass die Leiterbahnen zugänglich sind. Wesentlich hierbei ist, dass sich die Kontaktstellen der Leiterbahnen im ersten Anschlussbereich und zweiten Anschlussbereich auf einer selben Seite des Flachkabels befinden. Dies ist insbesondere dann typischer Weise der Fall, wenn die elektrischen Leiterbahnen auf ein Trägersubstrat aufgebracht sind, beispielsweise im Druckverfahren, so dass nur Öffnungen (Durchbrechungen) der Deckschicht ausgebildet werden können, ohne die Leiterbahnen zu beschädigen.

Das flexible Flachkabel weist einen den ersten Anschlussbereich enthaltenden Basisabschnitt und mindestens einen mit der Basisabschnitt verbundenen streifenförmigen Abschnitt (Streifenabschnitt) auf, welcher den zweiten Anschlussbereich aufweist. Hierbei ist der streifenförmige Abschnitt als Teil des flexiblen Flachkabels so umfaltbar oder umgefaltet, dass der zweite Anschlussbereich dem ersten Anschlussbereich zugewandt ist. Der mindestens eine streifenförmige Abschnitt ist vorzugsweise länglich ausgebildet. Ebenso ist der Basisabschnitt vorzugsweise länglich ausgebildet.

Der erste Anschlussbereich und der zweite Anschlussbereich sind auf derselben Seite des Flachkabels angeordnet, d.h. die beiden Anschlussbereiche sind einander nicht zugewandt, wenn der streifenförmige Abschnitt nicht umgefaltet ist. Vielmehr sind die beiden Anschlussbereiche auf derselben Seite des Flachkabels angeordnet. Im umgefalteten Zustand hingegen, ist der zweite Anschlussbereich gegenüber dem nicht-gefalteten Zustand um 180° gedreht, so dass die beiden Anschlussbereiche einander zugewandt sind. Sowohl im nicht-gefalteten Zustand wie auch im umgefalteten Zustand sind die Flächennormale des Flachkabels im ersten Anschlussbereich und die Flächennormale des Flachkabels im zweiten Anschlussbereich zueinander parallel.

In vorteilhafter Weise können auf diese Weise einander gegenüberliegende elektrische Strukturen, insbesondere zwei Flächenelektroden eines elektrooptischen Funktionselements, durch ein und dasselbe Flachkabel elektrisch kontaktiert werden. Eine elektrische Kontaktierung ist in vorteilhafter Weise auch von zwei Seiten her, d.h. aus zwei entgegengesetzten Richtungen, möglich. Im Unterschied zum Stand der Technik kann auf die Verwendung von zwei separaten Flachkabeln verzichtet werden, wodurch Material und Kosten eingespart werden können.

Bei einer vorteilhaften Ausgestaltung des flexiblen Flachkabels ist der den zweiten Anschlussbereich aufweisende, streifenförmige Abschnitt randständig am Basisabschnitt angeordnet. Dies ermöglicht eine besonders einfache Handhabung und Faltung des streifenförmigen Abschnitts zur Kontaktierung der zugehörigen elektrischen Struktur. Vorteilhaft kann es sein, wenn der streifenförmige Abschnitt vom Basisabschnitt seitlich absteht, wobei die Erstreckungsrichtung des streifenförmigen Abschnitts verschieden ist von einer Erstreckungsrichtung des Basisabschnitts. Beispielsweise steht der streifenförmige Abschnitt im rechten Winkel vom Basisabschnitt ab.

Gemäß einer weiteren Ausgestaltung des flexiblen Flachkabels ist der streifenförmige Abschnitt so umfaltbar oder umgefaltet, dass der zweite Anschlussbereich seitlich versetzt zum ersten Anschlussbereich angeordnet ist, d.h. die beiden Anschlussbereiche haben keine Gegenüberstellung (in Sicht senkrecht durch die Ebene des Flachkabels im nicht-gekrümmten Zustand). Alternativ ist es gleichermaßen möglich, dass der streifenförmige Abschnitt so umfaltbar oder umgefaltet ist, dass der zweite Anschlussbereich in Gegenüberstellung zum ersten Anschlussbereich angeordnet ist.

Gemäß einer weiteren Ausgestaltung des flexiblen Flachkabels ist zwischen dem Basisabschnitt und dem streifenförmigen Abschnitt eine Vertiefung einer Vorderkante des Flachkabels ausgebildet. Diese Maßnahme ermöglicht eine besonders einfache Herstellung des streifenförmigen Abschnitts, insbesondere aus herkömmlichen Flachkabeln.

Gemäß einer Ausgestaltung des Flachkabels sind die elektrischen Leiterbahnen auf ein elektrisch isolierendes Trägersubstrat aufgebracht und somit mit dem Trägersubstrat fest verbunden. Beispielsweise ist das Trägersubstrat mit den elektrischen Leiterbahnen beschichtet, insbesondere im Druckverfahren, beispielsweise Siebdruckverfahren. Zudem sind die elektrischen Leiterbahnen durch eine elektrisch isolierende Deckschicht abgedeckt. Das Trägersubstrat und die Deckschicht formen gemeinsam eine Isolationshülle, welche die elektrischen Leiterbahnen umhüllt. Bei dieser Ausgestaltung weisen der erste Anschlussbereich und der zweite Anschlussbereich vorzugsweise nur auf der vom Trägersubstrat abgewandten Seite zumindest an den Kontaktstellen keine Isolationsschicht auf, d.h. die Deckschicht ist dort entfernt, z.B. mit einer oder mehreren Öffnungen (Durchbrechungen) versehen.

Gemäß einer weiteren Ausgestaltung des Flachkabels sind die elektrischen Leiterbahnen vorgefertigt, beispielsweise als Streifen aus einer Metallfolie, und zwischen zwei Isolationsschichten aus elektrisch isolierendem Material laminiert, welche gemeinsam eine Isolationshülle formen, welche die elektrischen Leiterbahnen einbettet. Bei dieser Ausgestaltung weisen der erste Anschlussbereich und der zweite Anschlussbereich vorzugsweise nur auf einer selben Seite zumindest an den Kontaktstellen keine Isolationsschicht auf.

Die elektrischen Leiterbahnen enthalten oder bestehen vorzugsweise aus einem metallischen Material, beispielsweise Kupfer, Aluminium, Edelstahl, Zinn, Gold, Silber oder Legierungen hieraus. Werden die elektrischen Leiterbahnen als Streifen aus einer Metallfolie hergestellt, kann das Metall abschnittsweise oder vollständig verzinnt sein. Dies ist besonders vorteilhaft um eine gute Lötbarkeit bei gleichzeitigem Korrosionsschutz zu erzielen. Zudem wird die Kontaktierung mit einem elektrisch leitfähigen Klebstoff verbessert.

Gemäß einer Ausgestaltung weisen die elektrischen Leiterbahnen eine Dicke von 10 µm bis 300 µm, bevorzugt von 30 µm bis 250 µm und insbesondere von 50 µm bis 150 µm auf. Derart dünne Leiter sind besonders flexibel und können beispielsweise gut in Verbundscheiben einlaminiert und aus diesen herausgeführt werden.

Gemäß einer Ausgestaltung weisen die elektrischen Leiterbahnen eine Breite von 0,1 mm bis 100 mm, insbesondere von 1 mm bis 50 mm und insbesondere von 10 mm bis 30 mm auf. Derartige Breiten sind besonders geeignet um in Verbindung mit den oben genannten Dicken eine ausreichende Stromtragefähigkeit zu erzielen.

Die Breite des Flachkabels kann konstant sein oder variieren. Insbesondere kann das Flachkabel im Bereich des ersten Anschlusselement, des zweiten Anschlusselements und/oder des dritten Anschlusselements und beispielsweise nur im Bereich des dritten Anschlusselements verbreitert sein.

In einer vorteilhaften Ausgestaltung des Flachkabels weist dieses eine Länge von 5 cm bis 150 cm, bevorzugt von 10 cm bis 100 cm und insbesondere von 50 cm bis 90 cm auf. Es versteht sich, dass die Länge, Breite und Dicke des Flachkabels an die Anforderungen des jeweiligen Einzelfalls angepasst werden können.

Bei einem erfindungsgemäßen Flachkabel definiert die Richtung der Länge die Erstreckungsrichtung. Die Längen- und die Breitenrichtung spannen die erste Seite und die, der ersten Seite gegenüberliegende, zweite Seite auf. Die erste Seite kann beispielsweise auch Oberseite und die zweite Seite kann auch Unterseite des Flachkabels genannt werden. Das erste Ende und das zweite Ende sind die einander gegenüberliegenden Enden (Endbereiche) des Flachleiters in Erstreckungsrichtung

Das flexible Flachkabel weist auf einer oder beiden Seiten eine Isolationsschicht auf, die beispielsweise in Form einer Isolationsfolie ausgebildet ist. Die Isolationsschicht ist mit den elektrischen Leiterbahnen fest verbunden und beispielsweise verklebt. Die Isolationsschicht enthält bevorzugt Polyimid oder Polyesther, besonders bevorzugt Polyethylenterephtalat (PET) oder Polyethylennapthalat(PEN) oder besteht daraus. Die Isolationsschicht kann auch aus einem elektrisch isolierenden Lack, bevorzugt einem Polymerlack, bestehen. Die Isolationsschicht kann auch thermoplastische Kunststoffe und Elastomere wie Polyamid, Polyoxymethylen, Polybutylenterephthalat oder Ethylen-Propylen-Dien-Kautschuk enthalten oder daraus bestehen. Alternativ können Vergusswerkstoffe wie Acrylat- oder Epoxidharzsysteme als Isolationsschicht verwendet werden.

Die Isolationsschicht weist bevorzugt eine Dicke von 10 µm bis 300 µm, besonders bevorzugt von 25 µm bis 200 µm und insbesondere von 60 µm bis 150 µm auf. Die Isolationsschicht ist beispielsweise über eine Klebstoffschicht mit den Leiterbahnen verklebt. Die Dicke der Klebstoffschicht beträgt beispielsweise von 10 µm bis 150 µm und besonders bevorzugt von 50 µm bis 75 µm. Derartige Isolationsschichten sind besonders dazu geeignet, die Leiterbahnen elektrisch zu isolieren und mechanisch zu stabilisieren sowie vor mechanischen Beschädigungen und Korrosion zu schützen.

In einer vorteilhaften Ausgestaltung des Flachkabels sind die Leiterbahnen vollständig von einer Isolationshülle ummantelt, d.h. auf beiden Seiten des Flachkabels befindet sich eine Isolationsschicht, wobei die beiden Isolationsschichten gemeinsam die Isolationshülle bilden. Die Isolationshülle kann insbesondere aus dem vorstehend genannten Trägersubstrat und der Deckschicht bestehen. Die Isolationshülle kann auch durch beidseitiges Laminieren der Leiterbahnen mit zwei Isolationsschichten geformt werden.

Derartige Flachkabel mit mindestens einer Isolationsschicht sind derart dünn, dass sie ohne Schwierigkeiten zwischen den einzelnen Scheiben in der thermoplastischen Zwischenschicht einer Verbundscheibe eingebettet und aus dieser herausgeführt werden können. Das Flachkabel eignet sich besonders zur Kontaktierung von elektrisch leitfähigen Strukturen in Verbundscheiben, insbesondere von gegenüberliegenden Flächenelektroden eines elektrooptischen Funktionselements.

In einer vorteilhaften Ausgestaltung des Flachkabels weist das Flachkabel im ersten Anschlussbereich, im zweiten Anschlussbereich und im dritten Anschlussbereich keine Isolationsschicht oder eine andere elektrische Isolierung auf. Dies ermöglicht die einfache elektrische und insbesondere galvanische Kontaktierung des Flachkabels. Es versteht sich, dass die Anschlussbereiche durch eine elektrisch leitfähige Beschichtung, wie eine Verzinnung, oder eine elektrisch nicht leitfähige Schicht, wie ein Lötlack, vor Korrosion geschützt sein können. Diese Schutzschicht wird üblicherweise erst bei der elektrischen Kontaktierung entfernt, verbrannt oder anderweitig durchdrungen, um einen elektrischen Kontakt zu ermöglichen.

Isolationsfreie Anschlussbereiche lassen sich durch Fenstertechniken bei der Herstellung oder durch nachträgliches Entfernen, beispielsweise durch Laserablation oder mechanisches Abtragen, herstellen. Bei der Fenstertechnik werden die Leiterbahnen auf einem Trägersubstrat durch eine Isolationsschicht (Deckschicht) mit entsprechenden Ausnehmungen (Fenstern) in den Anschlussbereichen beschichtet, beispielsweise beklebt oder laminiert. Alternativ werden die Leiterbahnen beidseitig laminiert, wobei eine Isolationsschicht entsprechende Ausnehmungen in den Anschlussbereichen aufweist. Beim nachträglichen Entfernen können entsprechende Ausnehmungen in den Anschlussbereichen in die Deckschicht eingebracht werden, wenn die Leiterbahnen auf ein Trägersubstrat aufgebracht wurden. Bei laminierten Flachkabeln können Ausnehmungen in den Anschlussbereichen in eine Isolationsschicht eingebracht werden.

Die Anschlussbereiche sind ihrer jeweiligen Verwendung nach ausgebildet. In einer vorteilhaften Ausgestaltung sind die Kontaktstellen als Lötkontaktstellen ausgebildet.

In einer vorteilhaften Ausgestaltung des Flachkabels sind im ersten Anschlussbereich, im zweiten Anschlussbereich und/oder im dritten Anschlussbereich jeweils eine oder mehrere Durchbrechungen der Isolationsschicht vorgesehen. Die Durchbrechung erstreckt sich dabei vollständig auf die Leiterbahn, d.h. sie bildet einen materialfreien Durchgang auf die Leiterbahn.

Das Flachkabel ist in dem mindestens einen streifenförmigen Abschnitt an mindestens einer Stelle (Faltbereich) umgefaltet. Das bedeutet, dass der streifenförmige Abschnitt zwischen dem Basisabschnitt und dem zweiten Anschlussbereich derart aus seiner Erstreckungsebene angehoben und herumgeführt ist, dass ein Teil des streifenförmigen Abschnitts mit einer Seite einem weiteren Teil des streifenförmigen Abschnitts auf derselben Seite zugewandt ist. Die Erstreckungsrichtung des streifenförmigen Abschnitts weicht durch die Umfaltung von seiner Erstreckungsrichtung vor der Umfaltung ab.

In einer vorteilhaften Ausgestaltung des Flachkabels erfolgt die Faltung um einen Winkel α (alpha). Der Winkel α gibt dabei die Abweichung der Erstreckungsrichtung des Teils des streifenförmigen Abschnitts nach dem mindestens einen Faltbereich zur Erstreckungsrichtung des Teils des streifenförmigen Abschnitts vor dem Faltbereich an. Der Winkel α (alpha) beträgt bevorzugt von 10° bis 170°, besonders bevorzugt von 45° bis 135°, noch mehr bevorzugt von 60° bis 120° und insbesondere von 80° bis 100°. Die Teile des streifenförmigen Abschnitts vor und nach dem mindestens einen Faltbereich bilden beispielsweise einen Winkel α von 90°. Beispielsweise zeigen der Teil des streifenförmigen Abschnitts jenseits des Faltbereichs, d.h. der umgefaltete Teil des streifenförmigen Abschnitts, und der Basisabschnitt in die gleiche Richtung und sind zueinander parallel. Dadurch kann eine besonders kompakte Bauform des Flachkabels erzielt werden.

In einer vorteilhaften Ausgestaltung des Flachkabels erfolgt die Faltung des streifenförmigen Abschnitts nicht scharfkantig. Bevorzugt weist die Faltung einen Krümmungsradius r von 0,1 mm bis 100 mm, bevorzugt von 0,5 mm bis 10 mm und insbesondere von 1 mm bis 5 mm auf. Dies vermeidet eine Beschädigung und Erhöhung des elektrischen Widerstands, wie es bei einer scharfkantigen Biegung der Fall sein könnte.

Die erfindungsgemäße Anschlussanordnung umfasst eine Verbundscheibe und zwei elektrisch leitfähige Strukturen, die zwischen den beiden Scheiben angeordnet sind. Bevorzugt sind die beiden elektrisch leitfähigen Strukturen, die im Innern einer Verbundscheibe angeordnet sind, zwei einander gegenüberliegende Flächenelektroden eines elektrooptischen Funktionselements. Insbesondere werden die beiden Flächenelektroden von zwei gegenüberliegenden Seiten (Richtungen) her elektrisch kontaktiert.

Der erste und der zweite Anschlussbereich sind bevorzugt jeweils mit einem Sammelleiter elektrisch leitend verbunden, der wiederum mit der elektrisch leitfähigen Struktur elektrisch leitend verbunden ist. Der Sammelleiter enthält beispielsweise einen streifen- oder bandförmigen metallischen Leiter, beispielsweise eine Metallfolie. Möglich ist auch, den Sammelleiter auf die elektrisch leitfähige Struktur abzuscheiden.

Die elektrisch leitfähigen Strukturen werden beispielsweise mit zwei Spannungsanschlüssen elektrisch verbunden, die auch Pole (positiver oder negativer Pol) genannt werden. Der erste Anschlussbereich und der zweite Anschlussbereich sind insbesondere mit zwei Spannungsanschlüssen verbunden oder verbindbar.

Die elektrische Leitungsverbindung zwischen den Anschlussbereichen des Flachkabels und den elektrisch leitfähigen Strukturen erfolgt vorzugsweise durch Löten, Bonden oder Schweißen. Beim Löten wird ein Weichlöten mit einem niedrigschmelzenden Lot bevorzugt. Alternativ kann die elektrisch leitfähige Verbindung durch Kleben mit einem elektrisch leitfähigen Kleber oder Klemmen erfolgen, beispielsweise mittels einer metallischen Klammer, Hülse oder Steckverbindung. Im Inneren der Verbundscheibe kann die elektrische Leitungsverbindung durch eine unmittelbare Berührung der elektrisch leitfähigen Bereiche erfolgen, wobei diese Anordnung fest in der Verbundscheibe einlaminiert ist und dadurch gegen Verrutschen gesichert ist.

Das elektrooptische Funktionselement liegt bevorzugt als Mehrschichtfolie mit zwei äußeren Trägerfolien vor. Bei einer solchen Mehrschichtfolie sind die Flächenelektroden und die aktive Schicht zwischen den beiden Trägerfolien angeordnet. Mit äußerer Trägerfolie ist hier gemeint, dass die Trägerfolien die beiden Oberflächen der Mehrschichtfolie ausbilden. Das Funktionselement kann dadurch als laminierte Folie bereitgestellt werden, die vorteilhaft verarbeitet werden kann. Das Funktionselement ist durch die Trägerfolien vorteilhaft vor Beschädigung, insbesondere Korrosion geschützt. Die Mehrschichtfolie enthält in der angegebenen Reihenfolge zumindest eine erste Trägerfolie, eine erste Flächenelektrode, eine aktive Schicht, eine zweite Flächenelektrode und eine zweite Trägerfolie.

Funktionselemente als Mehrschichtfolien sind kommerziell erhältlich. Das zu integrierende Funktionselement wird typischerweise aus einer Mehrschichtfolie mit größeren Ausmaßen in der gewünschten Form und Größe ausgeschnitten. Dies kann mechanisch erfolgen, beispielsweise mit einem Messer. In einer vorteilhaften Ausführung erfolgt das Ausschneiden mittels eines Lasers. Es hat sich gezeigt, dass die Seitenkante in diesem Fall stabiler ist als beim mechanischen Schneiden. Bei mechanisch geschnittenen Seitenkanten kann die Gefahr bestehen, dass sich das Material gleichsam zurückzieht, was optisch auffällig ist und die Ästhetik der Scheibe nachteilig beeinflusst.

Die erste Flächenelektrode und die zweite Flächenelektrode werden jeweils von einer elektrisch leitfähigen Schicht gebildet. Diese elektrisch leitfähigen Schichten enthalten zumindest ein Metall, eine Metalllegierung oder ein transparentes leitfähiges Oxid, bevorzugt ein transparentes leitfähiges Oxid, und weisen eine Dicke von 10 nm bis 2 µm auf. Die Flächenelektroden sind bevorzugt transparent. Transparent bedeutet hier durchlässig für elektromagnetische Strahlung, vorzugsweise elektromagnetische Strahlung einer Wellenlänge von 300 nm bis 1300 nm und insbesondere für sichtbares Licht. Elektrisch leitfähige Schichten sind beispielsweise aus DE 20 2008 017 611 U1, EP 0 847 965 B1 oder WO2012/052315 A1 bekannt. Sie enthalten typischerweise eine oder mehrere, beispielsweise zwei, drei oder vier elektrisch leitfähige, funktionelle Einzelschichten. Die funktionellen Einzelschichten enthalten bevorzugt zumindest ein Metall, beispielsweise Silber, Gold, Kupfer, Nickel und/oder Chrom, oder eine Metalllegierung. Die funktionellen Einzelschichten enthalten besonders bevorzugt mindestens 90 Gew. % des Metalls, insbesondere mindestens 99,9 Gew. % des Metalls. Die funktionellen Einzelschichten können aus dem Metall oder der Metalllegierung bestehen. Die funktionellen Einzelschichten enthalten besonders bevorzugt Silber oder eine silberhaltige Legierung. Solche funktionellen Einzelschichten weisen eine besonders vorteilhafte elektrische Leitfähigkeit bei gleichzeitiger hoher Transmission im sichtbaren Spektralbereich auf. Die Dicke einer funktionellen Einzelschicht beträgt bevorzugt von 5 nm bis 50 nm, besonders bevorzugt von 8 nm bis 25 nm. In diesem Dickenbereich wird eine vorteilhaft hohe Transmission im sichtbaren Spektralbereich und eine besonders vorteilhafte elektrische Leitfähigkeit erreicht.

Die Flächenelektroden können prinzipiell durch jede elektrisch leitfähige Schicht gebildet werden, die elektrisch kontaktiert werden kann.

Bevorzugt enthalten die erste Trägerfolie und/oder die zweite Trägerfolie zumindest ein im Autoklavprozess nicht vollständig aufschmelzendes Polymer, bevorzugt Polyethylenterephthalat (PET). Besonders bevorzugt bestehen die erste und die zweite Trägerfolie aus einer PET-Folie. Das ist besonders vorteilhaft im Hinblick auf die Stabilität der Mehrschichtfolie. Die Trägerfolien können aber auch beispielsweise Ethylenvinylacetat (EVA) und/oder Polyvinylbutyral (PVB), Polypropylen, Polycarbonat, Polymethylmetacrylat, Polyacrylat, Polyvinylchlorid, Polyacetatharz, Gießharze, Acrylate, Fluorinierte Ethylen-Propylene, Polyvinylfluorid und/oder Ethylen-Tetrafluorethylen enthalten. Die Dicke jeder Trägerfolie beträgt bevorzugt von 0,1 mm bis 1 mm, besonders bevorzugt von 0,1 mm bis 0,2 mm. Die Trägerfolien sind bevorzugt transparent. Die Flächenelektroden sind bevorzugt auf einer Oberfläche der Trägerfolie angeordnet, das heißt auf genau einer der beiden Seiten der Trägerfolie (also auf deren Vorderseite oder deren Rückseite). Die Trägerfolien sind dabei im Schichtstapel der Mehrschichtfolie so ausgerichtet, dass die Flächenelektroden benachbart zur aktiven Schicht angeordnet sind.

Unter elektrisch regelbaren optischen Eigenschaften werden im Sinne der Erfindung solche Eigenschaften verstanden, die stufenlos regelbar sind, aber gleichermaßen auch solche, die zwischen zwei oder mehr diskreten Zuständen geschaltet werden können.

Das Funktionselement kann außer der aktiven Schicht und den Flächenelektroden weitere an sich bekannte Schichten aufweisen, beispielsweise Barriereschichten, Blockerschichten, Antireflexionsschichten, Schutzschichten und/oder Glättungsschichten.

Das Funktionselement ist über eine Zwischenschicht zwischen der ersten Scheibe und der zweiten Scheibe der Verbundscheibe eingebunden. Die Zwischenschicht umfasst dabei bevorzugt eine erste thermoplastische Verbundfolie, die das Funktionselement mit der ersten Scheibe verbindet, und eine zweite thermoplastische Verbundfolie, die das Funktionselement mit der zweiten Scheibe verbindet. Typischerweise wird die Zwischenschicht durch mindestens die erste und die zweite thermoplastische Verbundfolie gebildet, die flächig aufeinander angeordnet werden und miteinander laminiert werden, wobei das Funktionselement zwischen die beiden Schichten eingelegt wird. Die mit dem Funktionselement überlappenden Bereiche der Verbundfolien bilden dann die Bereiche, welche das Funktionselement mit den Scheiben verbinden. In anderen Bereichen der Scheibe, wo die thermoplastischen Verbundfolien direkten Kontakt zueinander haben, können sie beim Laminieren derart verschmelzen, dass die beiden ursprünglichen Schichten unter Umständen nicht mehr erkennbar sind und stattdessen eine homogene Zwischenschicht vorliegt.

Eine thermoplastische Verbundfolie kann beispielsweise durch eine einzige thermoplastische Folie ausgebildet werden. Eine thermoplastische Verbundfolie kann auch aus Abschnitten unterschiedlicher thermoplastischer Folien gebildet werden, deren Seitenkanten aneinandergesetzt sind. Zusätzlich zu einer ersten thermoplastischen Verbundfolie oder einer zweiten thermoplastischen Verbundfolie können auch weitere thermoplastische Verbundfolien vorhanden sein. Diese können bei Bedarf auch zur Einbettung weiterer Folien umfassend funktionelle Schichten, beispielsweise infrarotreflektierender Schichten oder akustisch dämpfender Schichten, genutzt werden.

Die thermoplastischen Verbundfolien können auch getönte oder gefärbte Bereiche enthalten. Solche Folien sind beispielsweise durch Koextrusion erhältlich. Alternativ können ein ungetönter Folienabschnitt und ein getönter oder gefärbter Folienabschnitt zur einer thermoplastischen Verbundfolie zusammengesetzt werden. Der getönte oder gefärbte Bereich kann homogen gefärbt oder getönt sein, das heißt eine ortsunabhängige Transmission aufweisen. Die Tönung oder Färbung kann aber auch inhomogen sein, insbesondere kann ein Transmissionsverlauf realisiert sein.

In einer bevorzugten Ausgestaltung ist das Funktionselement, genauer die Seitenkanten des Funktionselements umlaufend von einer thermoplastischen Rahmenfolie umgeben. Die Rahmenfolie ist rahmenartig ausgebildet mit einer Aussparung, in welche das Funktionselement eingelegt wird. Die thermoplastische Rahmenfolie kann durch eine thermoplastische Folie gebildet werden, in welche die Aussparung durch Ausschneiden eingebracht worden ist. Alternativ kann die thermoplastische Rahmenfolie auch aus mehreren Folienabschnitten um das Funktionselement zusammengesetzt werden. Die Zwischenschicht ist somit in einer bevorzugten Ausführungsform aus insgesamt mindestens drei flächig aufeinander angeordneten thermoplastischen Verbundfolien gebildet, wobei die Rahmenfolie als mittlere Schicht eine Aussparung ausweist, in der das Funktionselement angeordnet ist. Bei der Herstellung wird die thermoplastische Rahmenfolie zwischen der ersten und der zweiten thermoplastischen Verbundfolie angeordnet, wobei die Seitenkanten aller thermoplastischen Folien bevorzugt in Deckung befindlich sind. Die thermoplastische Rahmenfolie weist bevorzugt etwa die gleiche Dicke auf wie das Funktionselement. Dadurch wird der lokale Dickenunterschied, der durch das örtlich begrenzte Funktionselement eingebracht wird, kompensiert, so dass Glasbruch beim Laminieren vermieden werden kann.

Automobilverglasungen, insbesondere Windschutzscheiben, Heckscheiben und Dachscheiben, weisen meist einen umlaufenden peripheren Abdeckdruck aus einer opaken Emaille auf, der insbesondere dazu dient, den zum Einbau der Scheibe verwendeten Kleber vor UV-Strahlung zu schützen und optisch zu verdecken. Dieser periphere Abdeckdruck wird bevorzugt dazu verwendet, auch die Kanten des Funktionselementes zu verdecken, die sich im Randbereich der Verglasung befinden. Die Sammelleiter sowie die erforderlichen elektrischen Anschlüsse werden ebenfalls im Bereich des Abdeckdrucks angebracht.

Die erste thermoplastische Verbundfolie und die zweite thermoplastische Verbundfolie sowie gegebenenfalls auch die thermoplastische Rahmenfolie enthalten bevorzugt zumindest Polyvinylbutyral (PVB), Ethylenvinylacetat (EVA) und / oder Polyurethan (PU), besonders bevorzugt PVB.

Die Dicke jeder thermoplastischen Verbundfolie sowie der Rahmenfolie beträgt bevorzugt von 0,2 mm bis 2 mm, besonders bevorzugt von 0,3 mm bis 1 mm, insbesondere von 0,3 mm bis 0,5 mm, beispielsweise 0,38 mm.

Die erste Scheibe und die zweite Scheibe sind bevorzugt aus Glas gefertigt sind, besonders bevorzugt aus Kalk-Natron-Glas, wie es für Fensterscheiben üblich ist. Die Scheiben können aber auch aus anderen Glassorten gefertigt sein, beispielsweise Quarzglas, Borosilikatglas oder Alumino-Sililat-Glas, oder aus starren klaren Kunststoffen, beispielsweise Polycarbonat oder Polymethylmethacrylat. Die Scheiben können klar oder auch getönt oder gefärbt sein. Sofern die Verbundscheibe als Windschutzscheibe verwendet wird, sollte diese im zentralen Sichtbereich eine ausreichende Lichttransmission aufweisen, bevorzugt mindestens 70 % im Haupt-Durchsichtbereich A gemäß ECE-R43.

Die Außenscheibe, die Innenscheibe und/oder die Zwischenschicht können weitere geeignete, an sich bekannte Beschichtungen aufweisen, beispielsweise Antireflexbeschichtungen, Antihaftbeschichtungen, Antikratzbeschichtungen, photokatalytische Beschichtungen oder Sonnenschutzbeschichtungen oder Low-E-Beschichtungen.

Die Dicke der ersten Scheibe und der zweiten Scheibe kann breit variieren und so den Erfordernissen im Einzelfall angepasst werden. Die erste Scheibe und die zweite Scheibe weisen vorteilhaft Standardstärken von 0,7 mm bis 25 mm, bevorzugt von 1,4 mm bis 2,5 mm für Fahrzeugglas und bevorzugt von 4 mm bis 25 mm für Möbel, Geräte und Gebäude, insbesondere für elektrische Heizkörper, auf. Die Größe der Scheiben kann breit variieren und richtet sich nach der Größe der erfindungsgemäßen Verwendung. Die erste und die zweite Scheibe weisen beispielsweise im Fahrzeugbau und Architekturbereich übliche Flächen von 200 cm² bis zu 20 m² auf.

Ein weiterer Aspekt der Erfindung umfasst ein Verfahren zur Herstellung einer erfindungsgemäßen Anschlussanordnung mit den folgenden Schritten:
a) Bereitstellen eines Flachkabels,
b) Umfalten des streifenförmigen Abschnitts des Flachkabels, derart dass der zweite Anschlussbereich dem ersten Anschlussbereich zugewandt wird,
c) Elektrisch leitendes Verbinden des ersten Anschlussbereichs mit der einen elektrisch leitfähigen Struktur und des zweiten Anschlussbereichs mit der anderen elektrisch leitfähigen Struktur.

Die Erfindung erstreckt sich weiterhin auf die Verwendung der erfindungsgemäßen Anschlussanordnung mit flexiblem Flachkabel zur Kontaktierung von elektrisch leitfähigen Strukturen auf oder in Einscheibensicherheitsglasscheiben oder Mehrscheibenverbundglasscheiben. Vorzugsweise wird das Flachkabel zur Kontaktierung von einander gegenüberliegenden Flächenelektroden eines elektrooptischen Funktionselements, beispielsweise ein SPD-Funktionselement oder PDLC-Funktionselement, eingesetzt, wobei eine Kontaktierung vorzugweise aus zwei entgegengesetzten Richtungen erfolgt.

Vorzugsweise erfolgt die Verwendung der erfindungsgemäßen Anschlussanordnung als Gebäudeverglasung oder Fahrzeugverglasung, bevorzugt als Fahrzeugverglasung, insbesondere als Windschutzscheibe oder Dachscheibe eines Kraftfahrzeugs.

Die verschiedenen Ausgestaltungen der Erfindung können einzeln oder in beliebigen Kombinationen realisiert sein. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung zu verlassen.

Die Erfindung wird nachfolgend anhand von Ausführungsbeispielen näher erläutert, wobei Bezug auf die beigefügten Figuren genommen wird. Es zeigen in vereinfachter, nicht maßstabsgetreuer Darstellung:
- Figur 1: eine schematische Schnittansicht einer erfindungsgemäßen Anschlussanordnung mit Verbundscheibe mit Funktionselement im nichttransparenten Zustand,
- Figur 2: eine schematische Schnittansicht der Anschlussanordnung von Figur 1 mit Funktionselement im transparenten Zustand,
- Figur 3: eine schematische Schnittansicht des Funktionselements von Figur 1 und 2,
- Figur 4: eine perspektivische Ansicht des Funktionselements von Figur 1 und 2,
- Figur 5: eine schematische Darstellung eines Ausführungsbeispiels des Flachkabels ohne Faltung des streifenförmigen Abschnitts,
- Figur 6: eine schematische Darstellung des Flachkabels von Figur 5 mit Faltung des streifenförmigen Abschnitts,
- Figur 7: eine schematische Darstellung des Flachkabels von Figur 6, welches an die Flächenelektroden des Funktionselements von Figur 4 angeschlossen ist,
- Figur 8: ein Flussdiagramm eines erfindungsgemäßen Verfahrens zur Herstellung einer erfindungsgemäßen Anschlussanordnung.

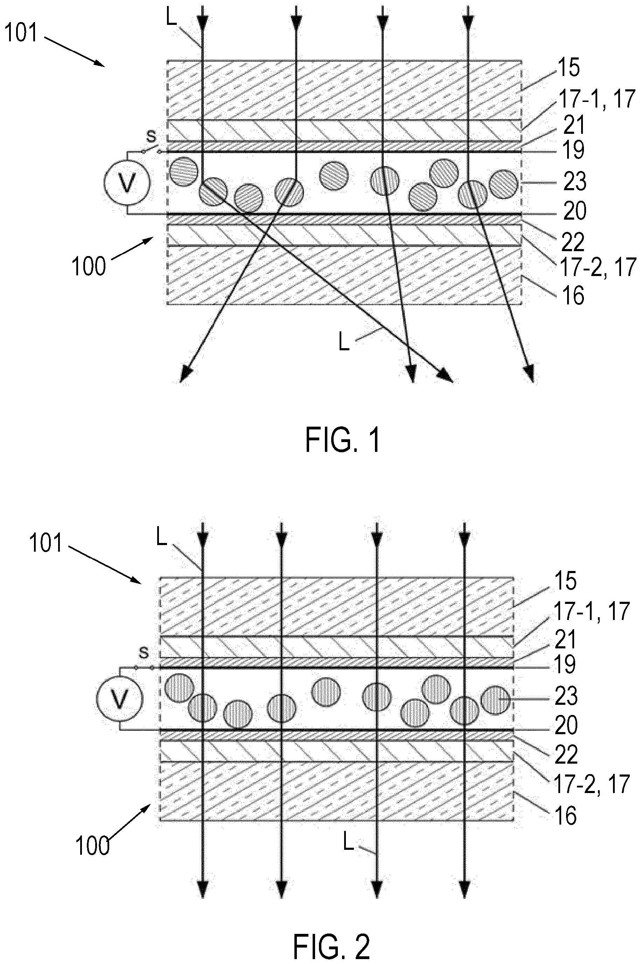

Es sei zunächst Bezug auf die Figuren 1 und 2 genommen, worin eine insgesamt mit der Bezugszahl 101 bezeichnete Anschlussanordnung mit Verbundscheibe 100 anhand einer Schnittansicht senkrecht zur Scheibenebene in schematischer Weise veranschaulicht ist. Die Verbundscheibe 100, die hier beispielsweise als Windschutzscheibe eines Kraftfahrzeugs ausgebildet ist, umfasst eine erste Scheibe 15, die als Außenscheibe dient, und eine zweite Scheibe 16 als Innenscheibe. Die Innenscheibe ist dabei die zum Fahrzeuginnenraum gerichtete Scheibe, während die Außenscheibe zur Fahrzeugumgebung weist. Die beiden Scheiben 15, 16 bestehen beispielsweise aus Kalk-Natron-Glas. Die beiden Scheiben 15, 16 sind durch eine thermoplastische Zwischenschicht 17 fest miteinander verbunden.

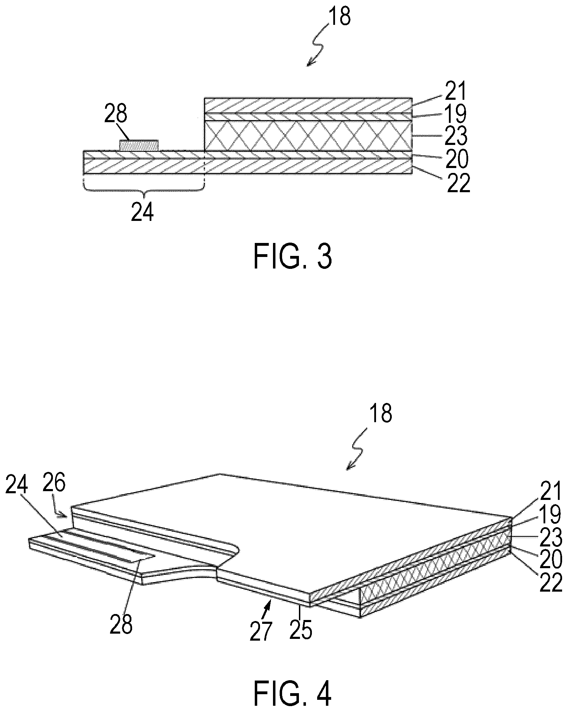

Die Verbundscheibe 100 ist mit einem elektrooptischen Funktionselement 18 (siehe auch Figuren 3 und 4) ausgestattet, bei dem es sich hier beispielsweise um ein PDLC-Funktionselement handelt. Beispielsweise dient das PDLC-Funktionselement als elektrisch regelbare Sonnenblende, die in einem Bereich oberhalb des zentralen Sichtbereichs B (wie in ECE-R43 definiert) angebracht ist. Das PDLC-Funktionselement ist durch eine kommerziell erhältliche PDLC-Mehrschichtfolie gebildet, die in die Zwischenschicht 17 eingelagert ist. Die Zwischenschicht 17 umfasst insgesamt drei thermoplastischen Verbundfolien, die jeweils durch eine thermoplastische Folie mit einer Dicke von beispielsweise 0,38 mm aus PVB ausgebildet sind. In den Figuren 1 und 2 sind nur eine erste thermoplastische Verbundfolie 17-1, die mit der ersten Scheibe 15 verbunden ist, und eine zweite thermoplastische Verbundfolie 17-2, die mit der zweiten Scheibe 16 verbunden ist, gezeigt. Die dazwischenliegende thermoplastische Rahmenfolie (nicht gezeigt) weist einen Ausschnitt auf, in welchen das zugeschnittene Funktionselement 18 passgenau, das heißt an allen Seiten bündig, eingelegt ist. Die dritte thermoplastische Verbundfolie bildet also gleichsam eine Art Passepartout für das Funktionselement 18, welches somit rundum in thermoplastisches Material eingekapselt und dadurch geschützt ist.

Das elektrisch regelbare Funktionselement 18 ist eine Mehrschichtfolie, bestehend aus einer aktiven Schicht 23 zwischen zwei Flächenelektroden 19, 20, und zwei Trägerfolien 21, 22. Die aktive Schicht 23 enthält eine Polymermatrix mit darin dispergierten Flüssigkristallen, die sich in Abhängigkeit der an die Flächenelektroden 19, 20 angelegten elektrischen Spannung S ausrichten, wodurch die optischen Eigenschaften geregelt werden können. Die Trägerfolien 21, 22 bestehen beispielsweise aus PET und weisen eine Dicke von beispielsweise 0,125 mm auf. Die Trägerfolien 21, 22 sind jeweils mit einer zur aktiven Schicht 23 weisenden Beschichtung aus ITO mit einer Dicke von etwa 100 nm versehen, welche an der ersten Trägerfolie 21 die erste Flächenelektrode 19 und an der zweiten Trägerfolie 22 die zweite Flächenelektrode 20 bilden.

Wird keine Spannung S angelegt, so sind die Flüssigkristalle ungeordnet ausgerichtet, was zu einer starken Streuung des durch die aktive Schicht 23 tretenden Lichts L führt. Dieser Zustand ist in Figur 1 veranschaulicht. Wird an die Flächenelektroden 19, 20 eine Spannung S angelegt, so richten sich die Flüssigkristalle in einer gemeinsamen Richtung aus und die Transmission von Licht L durch die aktive Schicht 23 wird erhöht. Das PDLC-Funktionselement wirkt weniger durch Herabsetzung der Gesamttransmission, sondern durch Erhöhung der Streuung. Dieser Zustand ist in Figur 2 veranschaulicht.

Die beiden Flächenelektroden 19, 20 sind jeweils über Sammelleiter und ein einziges Flachkabel als Verbindungskabel mit der Bordelektrik verbindbar, was im Weiteren näher erläutert wird.

Figur 4 zeigt eine perspektivische Ansicht des Funktionselements 18 der Anschlussanordnung 101 mit Verbundscheibe 100 von Figur 1 und 2. Zum Zwecke einer einfacheren Darstellung ist nur das Funktionselement 18 dargestellt. Wie in Figur 4 erkennbar, ist eine Längsseite (Längskante) des Funktionselements 18 mit zwei Anschlusszonen 24, 25 versehen, welche für eine elektrische Kontaktierung der zugehörigen Flächenelektrode 20, 19 dienen.

Die erste Trägerfolie 21 und hieran aufgebrachte erste Flächenelektrode 19 sowie die aktive Schicht 23 weisen entlang der Längskante einen ersten Ausschnitt 26 auf, der sich bis zur zweiten Trägerfolie 22 mit aufgebrachter zweiter Flächenelektrode 20 erstreckt. Die zweite Flächenelektrode 22 ist daher von der Seite der aktiven Schicht her (hier von oben) zugänglich. Die zweite Trägerfolie 22 und die zweite Flächenelektrode 20 bilden im Bereich des ersten Ausschnitts 26 eine erste Anschlusszone 24. In entsprechender Weise weisen die zweite Trägerfolie 22 und aufgebrachte zweite Flächenelektrode 20 sowie die aktive Schicht 23 entlang der selben Längskante einen zweiten Ausschnitt 27 auf, der sich bis zur ersten Trägerfolie 21 und aufgebrachter erster Flächenelektrode 19 erstreckt. Die erste Flächenelektrode 19 ist daher von der Seite der aktiven Schicht 23 her (hier von unten) zugänglich. Die erste Trägerfolie 21 und die erste Flächenelektrode 19 bilden im Bereich des zweiten Ausschnitts 27 eine zweite Anschlusszone 25.

Jede Anschlusszone 24, 25 ist mit einem Sammelleiter (Busbar) versehen, der hier beispielsweise durch einen silberhaltigen Siebdruck ausgebildet ist. In Figur 4 ist aufgrund der perspektivischen Darstellung nur der Sammelleiter 28 der ersten Anschlusszone 24 erkennbar, wobei der Sammelleiter der zweiten Anschlusszone 25 analog ausgebildet ist. Die beiden Anschlusszonen 24, 25 sind entlang der Längskante des Funktionselements 18 seitlich versetzt angeordnet und anlog ausgebildet. Die Ausführungen für die erste Anschlusszone 24 gelten somit in entsprechender Weise für die zweite Anschlusszone 25.

Figur 3 zeigt ergänzend einen Schnitt senkrecht durch die Scheibenebene im Bereich der ersten Anschlusszone 24, welche die zweite Flächenelektrode 20 und die zweite Trägerfolie 22 sowie den darauf aufgebrachten Sammelleiter 28 zeigt.

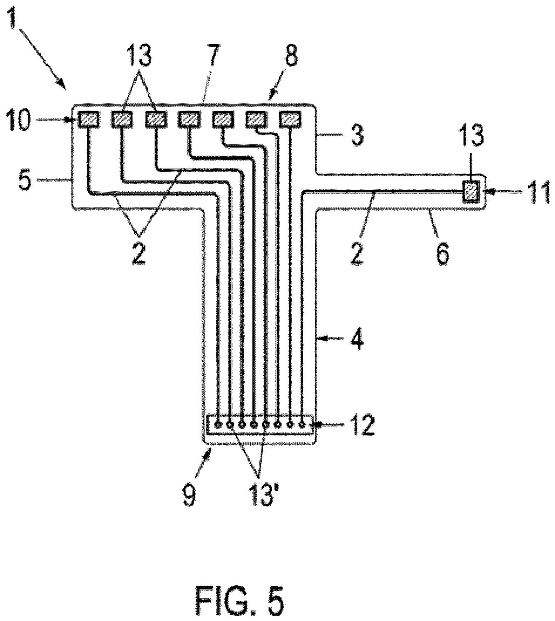

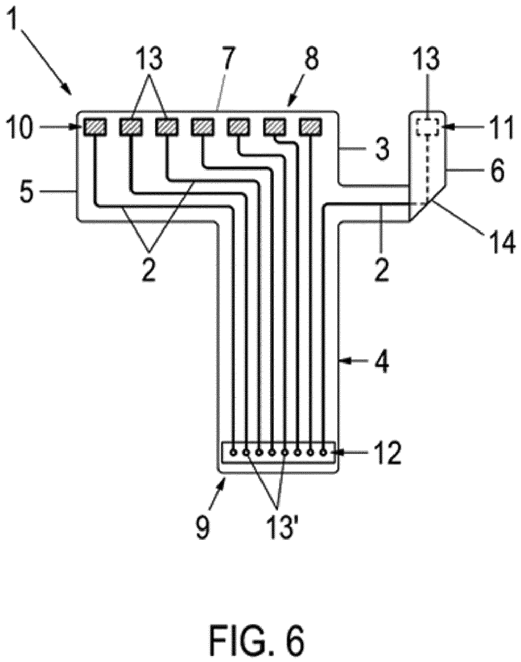

Es wird nun Bezug die Figuren 5 und 6 genommen, worin ein insgesamt mit der Bezugszahl 1 bezeichnetes flexibles Flachkabel mit länglicher Struktur in schematischer Weise veranschaulicht ist. Das Flachkabel 1 dient zum gemeinsamen Anschluss an die beiden Anschlusszonen 24, 25.

Das Flachkabel 1 weist eine Mehrzahl elektrischer Leiterbahnen 2 auf, die auf ein Trägersubstrat 3 aus einem elektrisch isolierenden Material, hier beispielsweise Polyimid, nebeneinander aufgebracht sind. Die elektrischen Leiterbahnen 2 bestehen aus einem metallischen Material, hier beispielsweise Kupfer, und sind im Druckverfahren auf das Trägersubstrat 3 aufgebracht. Die elektrischen Leiterbahnen 2 sind durch eine nicht näher dargestellte Deckschicht 4 aus einem elektrisch isolierenden Material, hier beispielsweise Polyimid, abgedeckt. Das Trägersubstrat und die Deckhülle 4 bilden gemeinsam eine Isolationshülle, in welche die Leiterbahnen 2 eingebettet sind.

Das Flachkabel 1 weist beispielsweise eine Länge von 5 cm bis 150 cm auf. Die elektrischen Leiterbahnen 2 haben beispielsweise eine Dicke von 10 µm bis 300 µm und eine Breite von 0,1 mm bis 100 mm. Das Trägersubstrat 3 und die Deckschicht 4 weisen jeweils beispielsweise eine Dicke von 10 µm bis 300 µm auf. Das Flachkabel 1 ist flexibel und kann gut in die Verbundscheibe einlaminiert und aus diesem herausgeführt werden.

Das flexible Flachkabel 1 verfügt über einen Basisabschnitt 5 und einen mit dem Basisabschnitt 5 (direkt) verbundenen streifenförmigen Abschnitt 6 (Streifenabschnitt), der randständig am Basisabschnitt 5 angeordnet ist und vom Basisabschnitt 5 seitlich absteht, hier beispielsweise senkrecht. Möglich wäre auch, dass der streifenförmige Abschnitt 6 durch eine Einsenkung der Vorderkante 7 des Flachkabels 1 geformt wird.

Das Flachkabel 1 weist an einem ersten Ende 8 im Basisabschnitt 5 einen ersten Anschlussbereich 10 und im streifenförmigen Abschnitt 6 einen zweiten Anschlussbereich 11 auf. Die beiden Anschlussbereiche 10, 11 sind auf derselben Seite des Flachleiters 1 ausgebildet und somit einander nicht zugewandt, wenn der streifenförmige Abschnitt 6 nicht umgefaltet ist. Weiterhin weist das Flachkabel 1 an seinem zweiten Ende 9 im Basisabschnitt 5 einen dritten Anschlussbereich 12 auf. Die Deckschicht 4 ist an den Anschlussbereichen 10, 11, 12 jeweils entfernt, so dass dies Anschlussbereiche 10, 11, 12 (nur) von einer Seite her zugänglich sind. Das Flachkabel 1 ist somit nahezu vollständig von einer Isolationshülle aus Polyimid ummantelt und dadurch elektrisch isoliert. Lediglich die Anschlussbereiche 10, 11, 12 sind ohne Deckschicht 4 ausgebildet. Dies kann beispielsweise durch eine Fenstertechnik bei der Herstellung oder durch nachträgliche Entfernung der Deckschicht 4, beispielsweise durch Laserablation, erzielt werden.

Das Flachkabel 1 verfügt hier beispielsweise über acht elektrische Leiterbahnen 2, die nebeneinander liegend auf dem Trägersubstrat 3 angeordnet sind. Sieben Leiterbahnen 2 erstrecken sich vom ersten Anschlussbereich 10 des Basisabschnitts 5 bis zum dritten Anschlussbereich 12 des Basisabschnitts 5. Eine Leiterbahn 2 erstreckt sich vom zweiten Anschlussbereich 11 des streifenförmigen Abschnitts 6 bis zum dritten Anschlussbereich 12 des Basisabschnitts 5. Jede Leiterbahn 2 weist eine Kontaktstelle 13 am ersten Ende 8 und eine Kontaktstelle 13' am zweiten Ende 9 des Flachkabels 1 auf. Die Kontaktstellen 13, 13' sind hier beispielsweise als Lötkontaktstellen ausgebildet.

Der streifenförmige Abschnitt 6 ist länglich ausgebildet und kann aufgrund der Flexibilität des Flachkabels 1 umgefaltet werden. Figur 5 zeigt eine Situation, bei der der streifenförmige Abschnitt 6 nicht umgefaltet ist, d.h. die Oberflächenabschnitte des Trägersubstrats 2 im Bereich des Basisabschnitts 5 und des streifenförmigen Abschnitts 6, auf welche die Leiterbahnen 2 aufgebracht sind, haben eine gleiche Ausrichtung. Hierbei handelt es sich beispielsweise um den Auslieferungszustand des Flachkabels 1. In Figur 6 ist eine Situation gezeigt, bei der der streifenförmige Abschnitt 6 in einem Faltbereich 14 umgefaltet ist. Im Faltbereich 14 kommt eine Seite eines Teils des streifenförmigen Abschnitts 6 auf derselben Seite eines weiteren Teils des streifenförmigen Abschnitts 6 zu liegen. Der Winkel zwischen den Erstreckungsrichtungen des streifenförmigen Abschnitts 6 vor dem Faltbereich 14 und nach dem Faltbereich 14 beträgt hier beispielsweise 90°, so dass der distale Teil des streifenförmigen Abschnitts 6, d.h. der umgefaltete Teil des streifenförmigen Abschnitts 6, und der längliche Basisabschnitt 5 in die gleiche Richtung zeigen und zueinander parallel sind. Die Faltung des streifenförmigen Abschnitts 6 erfolgt nicht scharfkantig, sondern mit einem Krümmungsradius r von 0,1 mm bis 100 mm, wodurch eine Beschädigung des Flachleiters 1 und insbesondere der Leiterbahn 2 vermieden werden kann.

Der erste Anschlussbereich 10 und der zweite Anschlussbereich 11 sind auf derselben Seite des Flachkabels 11 angeordnet. Im umgefalteten Zustand hingegen, wie in Figur 6 gezeigt, ist der zweite Anschlussbereich 11 um 180° gedreht, so dass die beiden Anschlussbereiche 10, 11 einander zugewandt sind, wobei der zweite Anschlussbereich 11 seitlich versetzt zum ersten Anschlussbereich 10 angeordnet ist. Möglich wäre auch, dass die beiden Anschlussbereiche 10, 11 eine Gegenüberstellung haben.

Der erste Anschlussbereich 10 und der zweite Anschlussbereich 11 haben somit eine verschiedene Ausrichtung.

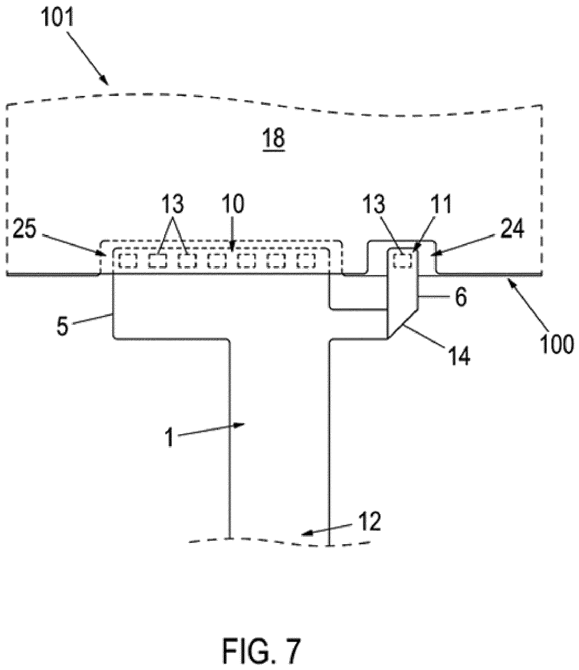

In Figur 7 ist der elektrische Anschluss des Flachkabels 1 an die beiden Anschlusszonen 24, 25 des Funktionselements 18 schematisch veranschaulicht. Hierbei ist der erste Anschlussbereich 10 des Basisabschnitts 5 direkt an die zweite Anschlusszone 25 elektrisch angeschlossen. Der zweite Anschlussbereich 11 an dem um 180° verdrehten streifenförmigen Abschnitt 6 ist direkt an die erste Anschlusszone 24 elektrisch angeschlossen. Die Kontaktstellen 13 des ersten Anschlussbereichs 10 sind mit dem Sammelleiter 28 der zweiten Anschlusszone 25 von der einen Seite (Richtung) her verlötet, die Kontaktstelle 13 des zweiten Anschlussbereichs 11 ist mit dem Sammelleiter der ersten Anschlusszone 24 von der anderen Seite (Richtung) her verlötet. Das erfindungsgemäße Flachkabel 1 ermöglicht somit in vorteilhafter Weise die elektrische Kontaktierung beider Anschlusszonen 24, 25.

Das Flachkabel 1 ist mit seinem Basisabschnitt 5 aus der Verbundscheibe 100 herausgeführt, wobei der dritte Anschlussbereich 12 außerhalb der Verbundscheibe 100 angeordnet und mit einer Steuereinrichtung beispielsweise einer Kraftfahrzeugelektronik elektrisch verbunden ist. Die Verbundscheibe 100 mit dem angeschlossenen Flachkabel 1 bildet eine Anschlussanordnung 101.

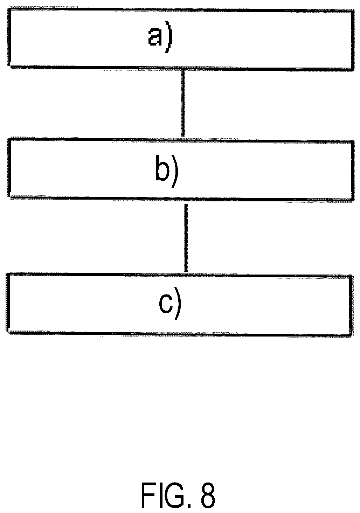

Figur 8 zeigt ein Flussdiagramm eines erfindungsgemäßen Verfahrens zur Herstellung der erfindungsgemäßen Anschlussanordnung 101.

Das Verfahren umfasst zumindest die folgenden Verfahrensschritte:
a) Bereitstellen eines Flachkabels 1,
b) Umfalten des streifenförmigen Abschnitts 6 des Flachkabels 1, derart dass der zweite Anschlussbereich 11 dem ersten Anschlussbereich 10 zugewandt wird,
c) Elektrisch leitendes Verbinden des ersten Anschlussbereichs 10 mit der ersten Flächenelektrode 19 und des zweiten Anschlussbereichs 11 mit der zweiten Flächenelektrode 20.

Aus obigen Ausführungen ergibt sich, dass die erfindungsgemäße Anschlussanordnung in vorteilhafter Weise eine gleichzeitige elektrische Kontaktierung von zwei elektrisch leitfähigen Strukturen, insbesondere zwei Flächenelektroden eines elektrooptischen Funktionselements, von zwei Richtungen her ermöglicht. Durch das Flachkabel und die hiermit realisierte Anschlussanordnung können Material und Kosten eingespart werden. Zudem ist die erfindungsgemäße Anschlussanordnung platzsparend und einfach in das technische Umfeld zu integrieren.

### Bezugszeichen:

- 1: Flachkabel
- 2: Leiterbahn
- 3: Trägersubstrat
- 4: Deckschicht
- 5: Basisabschnitt
- 6: streifenförmiger Abschnitt
- 7: Vorderkante
- 8: erstes Ende
- 9: zweites Ende
- 10: erster Anschlussbereich
- 11: zweiter Anschlussbereich
- 12: dritter Anschlussbereich
- 13, 13': Kontaktstelle
- 14: Faltbereich
- 15: erste Scheibe
- 16: zweite Scheibe
- 17: Zwischenschicht
- 17-1, 17-2: Verbundfolie
- 18: Funktionselement
- 19: erste Flächenelektrode
- 20: zweite Flächenelektrode
- 21: erste Trägerfolie
- 22: zweite Trägerfolie
- 23: aktive Schicht
- 24: erste Anschlusszone
- 25: zweite Anschlusszone
- 26: erster Ausschnitt
- 27: zweiter Ausschnitt
- 28: Sammelleiter

- 100: Verbundscheibe
- 101: Anschlussanordnung

## Patentansprüche

1. Anschlussanordnung (101), umfassend:
- eine Verbundscheibe (101) aus einer ersten Scheibe (15) und einer zweiten Scheibe (16), die mit einer Zwischenschicht (17) verbunden sind,
- zwei elektrisch leitfähige Strukturen, insbesondere zwei einander gegenüberliegende Flächenelektroden (19, 20) eines elektrooptischen Funktionselements (18), die zwischen der ersten Scheibe und der zweiten Scheibe angeordnet sind, und
- ein flexibles Flachkabel (1) mit elektrischen Leiterbahnen (2), umfassend:
- einen ersten Anschlussbereich (10) an einem ersten Ende (8) und auf einer ersten Seite des Flachkabels (1), wobei der erste Anschlussbereich (10) eine Kontaktstelle (13) mindestens einer Leiterbahn (2) aufweist,
- mindestens einen zweiten Anschlussbereich (11) am ersten Ende (8) und auf der ersten Seite des Flachkabels (1), wobei der zweite Anschlussbereich (11) eine Kontaktstelle (13) mindestens einer Leiterbahn (2) aufweist,
- einen dritten Anschlussbereich (12) mit Kontaktstellen (13') der Leiterbahnen (2) an einem zweiten Ende (9) des Flachkabels (1),
wobei das Flachkabel (1) einen den ersten Anschlussbereich (10) enthaltenden Basisabschnitt (5) und mindestens einen mit der Basisabschnitt (5) verbundenen streifenförmigen Abschnitt (6) aufweist, welcher den zweiten Anschlussbereich (11) enthält, wobei der streifenförmige Abschnitt (6) so umfaltbar oder umgefaltet ist, dass der zweite Anschlussbereich (11) dem ersten Anschlussbereich (10) zugewandt ist,
wobei der erste Anschlussbereich (10) mit der einen elektrisch leitfähigen Struktur und der zweite Anschlussbereich (11) mit der anderen elektrisch leitfähigen Struktur elektrisch leitend und insbesondere galvanisch verbunden sind, wobei das Flachkabel (1) aus der Verbundscheibe (100) herausgeführt ist und der dritte Anschlussbereich (13) außerhalb der Verbundscheibe (100) angeordnet ist.

2. Anschlussanordnung (101) nach Anspruch 1, mit einem flexiblen Flachkabel (1), bei welchem der streifenförmige Abschnitt (6) randständig am Basisabschnitt (5) angeordnet ist.

3. Anschlussanordnung (101) nach Anspruch 1, mit einemflexiblen Flachkabel (1), bei welchem der streifenförmige Abschnitt (6) vom Basisabschnitt (5) seitlich, insbesondere im rechten Winkel, absteht.

4. Anschlussanordnung (101) nach einem der Ansprüche 1 bis 3, mit einem flexiblen Flachkabel (1), bei welchem der streifenförmige Abschnitt (6) so umfaltbar oder umgefaltet ist, dass der zweite Anschlussbereich (11) seitlich versetzt zum ersten Anschlussbereich (10) angeordnet ist.

5. Anschlussanordnung (101) nach einem der Ansprüche 1 bis 3, mit einem flexiblen Flachkabel (1), bei welchem der streifenförmige Abschnitt (6) so umfaltbar oder umgefaltet ist, dass der zweite Anschlussbereich (11) in Gegenüberstellung zum ersten Anschlussbereich (10) angeordnet ist.

6. Anschlussanordnung (101) nach einem der Ansprüche 1 bis 5, mit einem flexiblen Flachkabel (1), bei welchem zwischen dem Basisabschnitt (5) und dem streifenförmigen Abschnitt (6) eine Vertiefung einer Vorderkante (7) des Flachkabels (1) ausgebildet ist.

7. Anschlussanordnung (101) nach einem der Ansprüche 1 bis 6, mit einem flexiblen Flachkabel (1), wobei ein Winkel α (alpha) zwischen einer Erstreckungsrichtung des streifenförmigen Abschnitts (6) vor mindestens einem Faltbereich (14) und einer Erstreckungsrichtung nach dem mindestens einen Faltbereich (14) von 10° bis 170° beträgt.

8. Anschlussanordnung (101) nach einem der Ansprüche 1 bis 7, mit einem flexiblen Flachkabel (1), bei welchem ein umgefalteter Teil des streifenförmigen Abschnitts (6) und der Basisabschnitt (5) in eine selbe Richtung zeigen.

9. Anschlussanordnung (101) nach einem der Ansprüche 1 bis 8, mit einem flexiblen Flachkabel (1), bei welchem die Leiterbahnen (2) mit einem Trägersubstrat (3) fest verbunden und von einer Deckschicht (4) bedeckt sind, wobei die Deckschicht zumindest an den Kontaktstellen (13) des ersten Anschlussbereichs (10) und des zweiten Anschlussbereichs (11) nicht vorhanden, insbesondere entfernt, ist.

10. Anschlussanordnung (101) nach einem der Ansprüche 1 bis 8, mit einem flexiblen Flachkabel (1), welches streifenförmige elektrische Leiterbahnen (2) aufweist, die beidseitig laminiert sind.

11. Anschlussanordnung (101) nach einem der Ansprüche 1 bis 10, mit einem flexiblen Flachkabel (1), bei welchem der streifenförmige Abschnitt (6) nicht scharfkantig umgefaltet ist, wobei die Faltung einen Krümmungsradius r von 0,1 mm bis 100 mm aufweist.

12. Anschlussanordnung (101) nach einem der Ansprüche 1 bis 11, bei welcher der erste Anschlussbereich (10) eine erste Flächenelektrode (19) von der einen Seite her und der zweite Anschlussbereich (11) eine zweite Flächenelektrode (20) von der anderen Seite her elektrisch kontaktiert.

13. Verfahren zur Herstellung einer Anschlussanordnung (101) nach einem der Ansprüche 1 bis 12, mit den folgenden Schritten:
a) Bereitstellen eines Flachkabels (1),
b) Umfalten des streifenförmigen Abschnitts (6) des Flachkabels (1), derart dass der zweite Anschlussbereich (11) dem ersten Anschlussbereich (10) zugewandt wird,
c) Elektrisch leitendes Verbinden des ersten Anschlussbereichs (10) mit der einen elektrisch leitfähigen Struktur und des zweiten Anschlussbereichs (11) mit der anderen elektrisch leitfähigen Struktur.

14. Verwendung der Anschlussanordnung nach einem der Ansprüche 1 bis 12 im Fahrzeugbereich oder im Baubereich, in Möbeln, elektrischen Geräten oder Dekorationsartikeln zur Kontaktierung von mindestens zwei elektrisch leitfähigen Strukturen, insbesondere zwei einander gegenüberliegende Elektroden eines elektrooptischen Funktionselements, auf oder in einer Einscheibensicherheitsglasscheibe oder einer Mehrscheibenverbundglasscheibe.

## Claims

1. Connection arrangement (101), comprising:
- a composite pane (101) composed of a first pane (15) and a second pane (16), which are connected to an intermediate layer (17),
- two electrically conductive structures, in particular two mutually opposed surface electrodes (19, 20) of an electro-optical functional element (18) that are arranged between the first pane and the second pane, and
- a flexible flat cable (1) having electrical conductor tracks (2), comprising:
- a first connection region (10) at a first end (8) and on a first side of the flat cable (1), wherein the first connection region (10) has a contact point (13) of at least one conductor track (2),
- at least one second connection region (11) at the first end (8) and on the first side of the flat cable (1), wherein the second connection region (11) has a contact point (13) of at least one conductor track (2),
- a third connection region (12) with contact points (13') of the conductor tracks (2) at a second end (9) of the flat cable (1),
wherein the flat cable (1) has a base section (5) containing the first connection region (10) and at least one strip-like section (6) connected to the base section (5) and containing the second connection region (11), wherein the strip-like section (6) is or can be folded over such that the second connection region (11) faces the first connection region (10),
wherein the first connection region (10) is electrically conductively and in particular galvanically connected to one electrically conductive structure and the second connection region (11) is electrically conductively and in particular galvanically connected to the other electrically conductive structure, wherein the flat cable (1) is routed out of the composite pane (100) and the third connection region (13) is arranged outside the composite pane (100).

2. Connection arrangement (101) according to claim 1, with a flexible flat cable (1), in which the strip-like section (6) is arranged at the edge on the base section (5).

3. Connection arrangement (101) according to claim 1, with a flexible flat cable (1), in which the strip-like section (6) protrudes laterally from the base section (5), in particular at a right angle.

4. Connection arrangement (101) according to one of claims 1 through 3, with a flexible flat cable (1), in which the strip-like section (6) is or can be folded such that the second connection region (11) is arranged laterally offset relative to the first connection region (10).

5. Connection arrangement (101) according to one of claims 1 through 3, with a flexible flat cable (1), in which the strip-like section (6) is or can be folded such that the second connection region (11) is arranged opposite the first connection region (10).

6. Connection arrangement (101) according to one of claims 1 through 5, with a flexible flat cable (1), in which a depression of a front edge (7) of the flat cable (1) is formed between the base section (5) and the strip-like section (6).

7. Connection arrangement (101) according to one of claims 1 through 6, with a flexible flat cable (1), wherein an angle α (alpha) between a direction of extension of the strip-like section (6) in front of at least one fold region (14) and a direction of extension behind the at least one fold region (14) is from 10° to 170°.

8. Connection arrangement (101) according to one of claims 1 through 7, with a flexible flat cable (1), in which a folded-over part of the strip-like section (6) and the base section (5) point in one and the same direction.

9. Connection arrangement (101) according to one of claims 1 through 8, with a flexible flat cable (1), in which the conductor tracks (2) are fixedly connected to a carrier substrate (3) and are covered by a covering layer (4), wherein the covering layer is not present, in particular is removed, at least at the contact points (13) of the first connection region (10) and of the second connection region (11).

10. Connection arrangement (101) according to one of claims 1 through 8, with a flexible flat cable (1) having strip-like electrical conductor tracks (2) that are laminated on both sides.

11. Connection arrangement (101) according to one of claims 1 through 10, with a flexible flat cable (1), in which the strip-like section (6) is folded over without sharp edges, wherein the fold has a radius of curvature r of 0.1 mm to 100 mm.

12. Connection arrangement (101) according to one of claims 1 through 11, in which the first connection region (10) electrically contacts a first surface electrode (19) from one side and the second connection region (11) electrically contacts a second surface electrode (20) from the other side.

13. Method for producing a connection arrangement (101) according to one of claims 1 through 12, comprising the following steps:
a) providing a flat cable (1),
b) folding over the strip-like section (6) of the flat cable (1) such that the second connection region (11) faces the first connection region (10),
c) electrically conductively connecting the first connection region (10) to one electrically conductive structure and the second connection region (11) to the other electrically conductive structure.

14. Use of the connection arrangement according to one of claims 1 through 12 in the vehicle sector or in the construction sector, in furniture, electrical appliances, or decorative items for contacting at least two electrically conductive structures, in particular two opposite electrodes of an electro-optical functional element, on or in a single pane safety glass pane or a multi-pane composite glass pane.

## Revendications

1. Dispositif de connexion (101), comprenant:
- une vitre composite (101) composée d'une première vitre (15) et d'une deuxième vitre (16), qui sont reliées à une couche intermédiaire (17),
- deux structures conductrices d'électricité, en particulier deux électrodes de surface (19, 20) mutuellement opposées d'un élément fonctionnel électro-optique (18), qui sont disposées entre la première vitre et la deuxième vitre, et
- un câble plat flexible (1) comportant des pistes conductrices électriques (2), comprenant
- une première zone de connexion (10) à une première extrémité (8) et sur un premier côté du câble plat (1), dans laquelle la première zone de connexion (10) a un point de contact (13) d'au moins une piste conductrice (2),
- au moins une deuxième zone de connexion (11) à la première extrémité (8) et sur le premier côté du câble plat (1), dans laquelle la deuxième zone de connexion (11) a un point de contact (13) d'au moins une piste conductrice (2),
- une troisième zone de connexion (12) avec des points de contact (13') des pistes conductrices (2) à une deuxième extrémité (9) du câble plat (1),
dans lequel le câble plat (1) a une section de base (5) contenant la première zone de connexion (10) et au moins une section en forme de bande (6) reliée à la section de base (5) et contenant la deuxième zone de connexion (11), dans lequel la section en forme de bande (6) est ou peut être repliée de sorte que la deuxième zone de connexion (11) soit en face de la première zone de connexion (10),
dans laquelle la première zone de connexion (10) est électriquement conductrice et en particulier galvaniquement connectée à une structure électriquement conductrice et la deuxième zone de connexion (11) est électriquement conductrice et en particulier galvaniquement connectée à l'autre structure électriquement conductrice, dans laquelle le câble plat (1) est acheminé hors de la vitre composite (100) et la troisième zone de connexion (13) est disposée à l'extérieur de la vitre composite (100).

2. Dispositif de connexion (101) selon la revendication 1, avec un câble plat flexible (1), dans lequel la section en forme de bande (6) est disposée sur le bord de la section de base (5).

3. Dispositif de connexion (101) selon la revendication 1, avec un câble plat flexible (1), dans lequel la section en forme de bande (6) dépasse latéralement de la section de base (5), en particulier à un angle droit.

4. Dispositif de connexion (101) selon l'une des revendications 1 à 3, avec un câble plat flexible (1), dans lequel la section en forme de bande (6) est ou peut être pliée de telle sorte que la deuxième zone de connexion (11) est disposée latéralement par rapport à la première zone de connexion (10).

5. Dispositif de connexion (101) selon l'une des revendications 1 à 3, avec un câble plat flexible (1), dans lequel la section en forme de bande (6) est ou peut être pliée de telle sorte que la deuxième zone de connexion (11) est disposée à l'opposé de la première zone de connexion (10).

6. Dispositif de connexion (101) selon l'une des revendications 1 à 5, avec un câble plat flexible (1), dans lequel une dépression d'un bord avant (7) du câble plat (1) est formée entre la section de base (5) et la section en forme de bande (6).

7. Dispositif de connexion (101) selon l'une des revendications 1 à 6, avec un câble plat flexible (1), dans lequel un angle α (alpha) entre une direction d'extension de la section en forme de bande (6) devant au moins une région de pliage (14) et une direction d'extension derrière la au moins une région de pliage (14) est compris entre 10° et 170°.

8. Dispositif de connexion (101) selon l'une des revendications 1 à 7, avec un câble plat flexible (1), dans lequel une partie repliée de la section en forme de bande (6) et la section de base (5) pointent dans une seule et même direction.

9. Dispositif de connexion (101) selon l'une des revendications 1 à 8, avec un câble plat flexible (1), dans lequel les pistes conductrices (2) sont reliées de manière fixe à un substrat porteur (3) et sont recouvertes d'une couche de revêtement (4), dans lequel la couche de revêtement n'est pas présente, en particulier est enlevée, au moins au niveau des points de contact (13) de la première zone de raccordement (10) et de la deuxième zone de raccordement (11).

10. Dispositif de connexion (101) selon l'une des revendications 1 à 8, avec un câble plat flexible (1) ayant des pistes de conducteurs électriques en forme de bande (2) qui sont laminées des deux côtés.

11. Dispositif de connexion (101) selon l'une des revendications 1 à 10, avec un câble plat flexible (1), dans lequel la section en forme de bande (6) est repliée sans arêtes vives, le pli ayant un rayon de courbure r de 0,1 mm à 100 mm.

12. Dispositif de connexion (101) selon l'une des revendications 1 à 11, dans lequel la première zone de connexion (10) est en contact électrique avec une première électrode de surface (19) d'un côté et la deuxième zone de connexion (11) est en contact électrique avec une deuxième électrode de surface (20) de l'autre côté.

13. Procédé de fabrication d'un dispositif de connexion (101) selon l'une des revendications 1 à 12, comprenant les étapes suivantes :
a) fournir un câble plat (1),
b) replier la section en forme de bande (6) du câble plat (1) de manière à ce que la deuxième zone de connexion (11) soit en face de la première zone de connexion (10),
c) connecter électriquement la première zone de connexion (10) à une structure électriquement conductrice et la deuxième zone de connexion (11) à l'autre structure électriquement conductrice.

14. Utilisation du dispositif de connexion selon l'une des revendications 1 à 12 dans le secteur automobile ou dans le secteur de la construction, dans les meubles, les appareils électriques ou les articles de décoration pour mettre en contact au moins deux structures conductrices d'électricité, en particulier deux électrodes opposées d'un élément fonctionnel électro-optique, sur ou dans une vitre en verre de sécurité à une seule vitre ou une vitre en verre composite à plusieurs vantaux.
